# EUROPÄISCHE PATENTSCHRIFT

(11) **EP 3 962 784 B1**
(45) Veröffentlichungstag und Bekanntmachung des Hinweises auf die Patenterteilung: **26.03.2025**
(21) Anmeldenummer: 20723020.2
(22) Anmeldetag: 16.04.2020
(51) Int. Cl.: B60R 16/037, G10L 21/10, B60Q 1/00, B60R 25/25

(54) **VERFAHREN ZUR PERSONALISIERUNG EINES KRAFTFAHRZEUGS**
METHOD FOR PERSONALIZING A MOTOR VEHICLE
PROCÉDÉ DE PERSONNALISATION D'UN VÉHICULE À MOTEUR

(30) Priorität: 30.04.2019 DE 102019206198
(43) Veröffentlichungstag der Anmeldung: 09.03.2022
(73) Patentinhaber: VOLKSWAGEN AKTIENGESELLSCHAFT, 38440 Wolfsburg (DE)
(72) Erfinder: WIESNER, Thomas David, 38114 Braunschweig (DE)
(86) Internationale Anmeldenummer: PCT/EP2020/060787
(87) Internationale Veröffentlichungsnummer: WO 2020/221602

(56) Entgegenhaltungen:
- WO-A1-2016/149915
- WO-A1-2018/035484
- DE-A1- 102004 025 559
- DE-T5- 112010 002 578
- US-A1- 2004 215 464
- US-A1- 2016 171 637
- US-A1- 2017 237 945
- US-B2- 9 400 564

## Beschreibung

Die Erfindung betrifft ein Verfahren zur Personalisierung eines Kraftfahrzeugs mit den Merkmalen vom Oberbegriff des Patentanspruchs 1. Die Erfindung betrifft auch ein Kraftfahrzeug zur Durchführung des Verfahrens mit den Merkmalen vom Oberbegriff des Patentanspruchs 6.

Ein Verfahren zur Personalisierung eines Kraftfahrzeugs ist aus der DE 10 2008 016 375 A1 bekannt geworden. Konkret wird in dieser Schrift eine Anzeigevorrichtung zur Anordnung an einem Karosseriebauteil eines Kraftwagens vorgeschlagen, welche mit einer programmierbaren Anzeigematrix versehen ist. Über ein geeignetes Bediengerät kann der Fahrer die Anzeigematrix programmieren. Je nach Programmierung der Anzeigematrix ist es möglich, situationsbezogen bestimmte Schriftzüge anzuzeigen.

In der DE 10 2014 102 506 B4 wird ein Fahrzeug mit einer in die Heckleuchten integrierten Beleuchtungsanordnung beschrieben, welche ungenutzten oder nicht-funktionalen Raum innerhalb eines Hohlraums der Heckbeleuchtung nutzt. Die integrierte Beleuchtungsanordnung ist derart ansteuerbar, dass es einem Benutzer oder dem Hersteller des Fahrzeugs erlaubt wird, zu bestimmten Zeiten kundenspezifisch anpassbare Beleuchtungssequenzen anzuzeigen. Dies soll auch dazu nutzbar gemacht werden, um das Fahrzeug eindeutig einem Benutzer zuordenbar zu machen, beispielsweise auf einem überfüllten oder dunklen Parkplatz.

Aus der DE 10 2017 106 563 A1 ist eine Fahrzeugkomponente in Form einer Kraftfahrzeugverkleidung offenbart, die einen ersten Abschnitt und einen zweiten Abschnitt aufweist. Der erste Abschnitt kann als personalisiertes oder kundenspezifisches Design in Form einer Oberflächenstruktur ausgebildet sein und beispielsweise den Namen des Käufers, das Firmenlogo des Herstellers oder ein anderes gewünschtes Text- oder Grafikdesign enthalten. Der zweite Abschnitt hingegen kann glatt beziehungsweise unauffällig gehalten sein.

Die DE 11 2010 002 578 T5 beschreibt eine Verkleidungskomponente eines Kraftfahrzeugs, die im unbeleuchteten Zustand nicht sichtbare Zeichen enthält. Es wird unter anderem vorgeschlagen, die Beleuchtung der Zeichen durch die Stimmer eines Benutzers zu aktivieren und somit für den Benutzer sichtbar zu machen.

Durch die WO 2018/035484 A1 wird ein Verfahren zur Projektion eines Bildes durch ein Projektionssystem eines Kraftfahrzeugs offenbart, wobei zunächst die Anwesenheit eines Benutzers innerhalb eines bestimmten Entfernungsgrenzwertes vom Kraftfahrzeug durch Näherungssensoren detektiert wird. Anschließend wird der Benutzer über ein von ihm mitgeführtes, mobiles Endgerät identifiziert. In Abhängigkeit der erlangten Benutzerinformationen wird durch das Projektionssystem eine interaktive Anfangsszene auf eine Fläche in der Nähe des Kraftfahrzeugs projiziert. Durch die interaktive Anfangsszene wird dem Benutzer die Möglichkeit gegeben, durch Gestik, andere Bewegungen oder auch durch Sprache die interaktive Anfangsszene derart zu verändern, dass bestimmte Funktionen ausgelöst werden können. Bspw. kann ein numerisches Eingabefeld auf die Fläche projiziert werden, um dem Benutzer die Eingabe eines Zugangscodes und damit das Öffnen einer Tür des Kraftfahrzeugs zu ermöglichen. Es kann auch eine Willkommensbotschaft auf die Fläche projiziert werden.

Aus der WO 2016/149915 A1 ist ein Verfahren zur Ausgabe von Informationen durch ein Kraftfahrzeug an einen Nutzer bekannt, bei dem eine Spracheingabe des Nutzers außerhalb des Kraftfahrzeugs über eine Spracheingabeschnittstelle erfasst und an einen Prozessor weitergeleitet wird. Der Prozessor führt eine Spracherkennung durch und erstellt auf Basis der Spracherkennung Ausgabeinformationen. Die Ausgabeinformationen werden dann über eine mit dem Prozessor verbundene Ausgabeschnittstelle an den Nutzer ausgegeben. Die Spracheingabeschnittstelle kann als Mikrofon ausgebildet sein. Die Ausgabeschnittstelle kann ein Display und einen Lautsprecher umfassen.

Aus der US 2016/0171637 A1 ist ein Verfahren zur Erfassung einer sich in Nähe eines Kraftfahrzeugs befindlichen Person bekannt, wobei das Kraftfahrzeug ein bordeigenes Carsharing-System aufweist. Ein bordeigenes, drahtloses Kommunikationssystem paart sich zunächst mit einem mobilen Endgerät der Person und bestimmt, dass sich die Person in der Nähe des Kraftahrzeugs befindet. Über eine nach außen gerichtete Anzeige einer Head-Up-Displayeinheit kann eine Nachricht an die in der Nähe des Kraftfahrzeugs befindliche Person ausgegeben werden. Die Nachricht kann den Namen der Person enthalten.

Schließlich wird in der US 9 400 564 B2 ein Kraftfahrzeug beschrieben, welches eine Benutzererkennung zur Erkennung eines Fahrers aufweist. Ferner ist ein interaktives Anzeigesystem vorhanden, welches basierend auf einer Fahrererkennung Anzeigen auf ein Fenster des Kraftfahrzeugs projizieren kann. Die Anzeigen weisen neben allgemeinen Informationen Hinweise zum Fahrverhalten des erkannten Fahrers auf. Über eine Gesichtserkennung ist ferner die genaue Position von Fahrzeuginsassen innerhalb des Kraftfahrzeugs erfassbar.

Ausgehend von diesem Stand der Technik ist es die Aufgabe der vorliegenden Erfindung, ein alternatives Verfahren zur möglichen Personalisierung eines Kraftfahrzeugs bereitzustellen, bei dem das Auffinden eines abgestellten Kraftfahrzeugs durch einen Benutzer erleichtert ist.

Vorliegende Aufgabe wird durch ein Verfahren mit den Merkmalen von Patentanspruch 1 gelöst. Vorteilhafte Ausbildungen des Verfahrens sind den abhängigen Ansprüchen zu entnehmen.

Es ist auch Aufgabe der vorliegenden Erfindung, ein geeignetes Kraftfahrzeug zur Durchführung des erfindungsgemäßen Verfahrens bereit zu stellen. Diese Aufgabe wird durch ein Kraftfahrzeug mit den Merkmalen von Patentanspruch 6 gelöst. Vorteilhafte Ausbildungen sind auch hier den abhängigen Ansprüchen zu entnehmen.

Die Erfindung geht zunächst aus von einem Verfahren zur Personalisierung eines Kraftfahrzeugs, wobei die Personalisierung zumindest durch eine grafische Ausgabe auf wenigstens einer graphischen Ausgabeeinrichtung des Kraftfahrzeugs in Form eines Schriftzugs am Kraftfahrzeug erfolgt. Die grafische Ausgabe enthält dabei also zumindest Buchstaben des Alphabets einer bestimmten Sprache, aber sie kann auch weitere Zeichen und Symbole enthalten.

Es wird ferner vorgeschlagen, dass die grafische Ausgabe als Reaktion auf eine von einem Benutzer durchgeführte und von einer Spracherkennungseinrichtung erkannte Spracheingabe durchgeführt wird, wobei die Spracheingabe den Wunsch des Benutzers erkennen lässt, dass von diesem ein Auffinden des Kraftfahrzeugs und/oder ein Öffnen des Kraftfahrzeugs gewünscht ist.

Ein Öffnen des Kraftfahrzeugs kann beispielsweise zum Zwecke des Entnehmens oder des Hineinlegens von Gegenständen aber auch zum Einsteigen und Fahren gewünscht sein.

Ein derartiges Verfahren ermöglicht die Personalisierung eines Kraftfahrzeugs in einer häufig auftretenden Alltagssituation, nämlich dann, wenn der Benutzer sein Kraftfahrzeug irgendwo abgestellt hat und dieses leichter wiederfinden möchte.

So ist beispielsweise denkbar, dass der Benutzer nach dem Einkaufen zu seinem Parkplatz zurückkehrt, wo er sein Fahrzeug abgestellt hat. Es ist in dieser Situation nach dem Verfahren nun beispielsweise möglich, dass der Benutzer in ein mobiles Endgerät, welches beispielsweise ein Smartphone sein kann, einen Sprachbefehl eingibt, der den Wunsch ausdrückt, das eigene Fahrzeug auffinden und/oder öffnen zu wollen.

Das mobile Endgerät verfügt über eine geeignete Kommunikationseinrichtung zur Kommunikation mit dem Kraftfahrzeug. Die Kommunikationseinrichtung kann bspw. hardwareseitig eine Schnittstelle zur drahtlosen Datenübermittlung sein, welche als Bluetooth- oder auch als Mobilfunkstandard (bspw. G5) ausgebildet ist. Softwareseitig ist der Einsatz einer entsprechenden App denkbar.

Wird danach die grafische Ausgabe des Schriftzugs am Kraftfahrzeug durchgeführt, so erleichtert dies dem Benutzer spürbar die Erfüllung seines Wunsches. Die grafische Ausgabe erfolgt vorzugsweise an einer besonders gut einsehbaren Stelle des Kraftfahrzeugs.

Es ist aber auch denkbar, dass die Spracherkennungseinrichtung Bestandteil des Kraftfahrzeugs selbst ist und der Benutzer zum Zeitpunkt seines Wunsches nach einem Auffinden und/oder Öffnen seines Fahrzeugs gar nicht über sein mobiles Endgerät verfügt. Sollte sich der Benutzer dann in der näheren Umgebung des Kraftfahrzeugs aufhalten, so ist trotzdem denkbar, dass durch die Sprache des Benutzers in Verbindung mit einem entsprechenden Sprachbefehl die Spracherkennungseinrichtung des Kraftfahrzeugs aktiviert wird und bei einem Wunsch des Benutzers zum Auffinden oder Öffnen des Kraftfahrzeugs eine entsprechende grafische Ausgabe am Kraftfahrzeug erfolgt.

In einer ersten Weiterbildung der Erfindung wird zum Zwecke der grafischen Ausgabe des Schriftzugs ein in einer Speichereinrichtung des Kraftfahrzeugs abgespeicherter Name des Benutzers ausgelesen. Der Name beinhaltet vorzugsweise den Vornamen des Benutzers. Es ist aber auch denkbar, den Vor- und den Nachnamen des Benutzers abzuspeichern und auszulesen. Alsdann wird eine grafische Ausgabeeinrichtung des Kraftfahrzeugs derart angesteuert, dass der ausgelesene Name zumindest als Bestandteil des Schriftzugs angezeigt wird. Der Name kann also beispielsweise Bestandteil eines Begrüßungssatzes sein.

Nach weiteren Merkmalen der Erfindung kann die Personalisierung des Kraftfahrzeugs zusätzlich durch Ausgabe eines akustischen Signals, insbesondere eines speziellen akustischen Signals erfolgen. Hierdurch kann die Aufmerksamkeit des Benutzers noch leichter auf das abgestellte Kraftfahrzeug gelenkt werden.

So kann eine Personalisierung durch das akustische Signal besonders gut durch eine Sprachausgabe des in der Speichereinrichtung abgespeicherten Namens des Benutzers realisiert werden.

Es ist anzumerken, dass die Eingabe von abzuspeichernden und später auszugebenden Zeichen sehr flexibel durch eine geeignete Eingabeeinrichtung des Kraftfahrzeugs (beispielsweise über einen im Fahrzeug installierten Touchscreen) oder durch ein mobiles Endgerät (beispielsweise Smartphone) erfolgen kann. Es ist auch denkbar, dies über eine geeignete Spracheingabe im Vorfeld des Verfahrens zu bewerkstelligen. Die Dateneingabe kann dadurch sehr vereinfacht werden, indem der Benutzer seinen Namen über eine Scaneinrichtung des Kraftfahrzeugs oder des mobilen Endgeräts von einem Dokument (bspw. Fahrzeugbrief) einscannen und dadurch in eine Speichereinrichtung einlesen lässt.

Im Zusammenhang mit einem Wunsch des Auffindens eines Kraftfahrzeugs, kann es sehr hilfreich sein, wenn als Reaktion auf die Spracheingabe des Benutzers ein aktueller Standort des Kraftfahrzeugs auf ein die Spracheingabe empfangendes, mobiles Endgerät drahtlos übermittelt wird. Also ist es beispielsweise denkbar, dass einem Benutzer nach einer Spracheingabe zum Auffinden seines Kraftfahrzeugs der Standort des Kraftfahrzeugs direkt auf dem Display seines Smartphones angezeigt wird und der Benutzer somit die Möglichkeit erhält, mit Hilfe seines smartphoneeigenen Navigationssystems zu Fuß dorthin zu navigieren.

Um einem unerlaubten Zugriff auf das Kraftfahrzeug vorzubeugen, wird gemäß weiterer Merkmale der Erfindung vorgeschlagen, dass vor der grafischen Ausgabe zur Personalisierung des Kraftfahrzeugs eine Überprüfung dahingehend durchgeführt wird, ob der Benutzer überhaupt zum Auslösen der besagten Reaktion berechtigt ist.

Die Überprüfung kann vorteilhaft dadurch realisiert werden, indem ein Passwort abgefragt wird, welches beispielsweise per Sprache oder manueller Eingabe angegeben werden kann. Eine Berechtigungsüberprüfung ist ferner über eine Fingerabdruckerkennung, eine Gesichtserkennung und/oder auch über die Erkennung der Stimme des Benutzers denkbar. All die vorgenannten Möglichkeiten zur Berechtigungsüberprüfung stellen bewährte und sichere Möglichkeiten dar.

Wie anfangs erwähnt, soll mit der Erfindung auch ein geeignetes Kraftfahrzeug zur Durchführung des erfindungsgemäßen Verfahrens vorgeschlagen werden. Hierbei geht die Erfindung von einem Kraftfahrzeug aus, mit wenigstens einer grafischen Ausgabevorrichtung zur Ausgabe wenigstens eines Schriftzugs sowie wenigstens einer akustischen Ausgabeeinrichtung zur Ausgabe eines akustischen Signals. Wenigstens eine vorhandene Speichereinrichtung dient zur Speicherung von Dateien.

Die grafische Ausgabeeinrichtung zur Ausgabe wenigstens eines Schriftzugs kann beispielsweise eine Projektionseinrichtung sein, die den Schriftzug auf eine von außen gut einsehbarer Stelle des Kraftfahrzeugs projiziert. Es ist auch denkbar, dass die Ausgabeeinrichtung ein Display, bspw. eine Leuchtdiodenmatrix an gut einsehbarer Stelle des Fahrzeugs ist.

Als akustische Ausgabeeinrichtung ist beispielsweise ein Außenlautsprecher denkbar, insbesondere ein Richtlautsprecher, mit dem der Schall auf einen sich nähernden, autorisierten Benutzer fokussiert werden kann.

Die zu speichernde Datei, welche vorzugsweise den Namen des Benutzers beinhaltet, kann beispielsweise eine vom Benutzer manuell eingegebene Textdatei sein oder auch eine Audiodatei, welche vom Benutzer zuvor über Sprache eingegeben wurde.

Es ist wenigstens eine Umwandlungseinrichtung zur Umwandlung einer Textdatei in Audio- und/oder Bilddaten oder zur Umwandlung einer Audiodatei in Text- und/oder Bilddaten vorhanden.

Eine Auswerte- und Steuereinrichtung dient zur Ansteuerung zumindest der wenigstens einen grafischen und/oder akustischen Ausgabeeinrichtung. Es ist ferner wenigstens eine Kommunikationseinrichtung zur Kommunikation des Kraftfahrzeugs mit einem mobilen Endgerät, beispielsweise mit einem Smartphone, vorhanden.

Es ist die Auswerte- und Steuereinrichtung ferner dazu hergerichtet, nach Empfang eines Auslösesignals wenigstens eine Datei aus der Speichereinrichtung auszulesen und in Abhängigkeit davon eine grafische Ausgabe über die grafische Ausgabeeinrichtung auszugeben.

Es ist dabei sehr zweckmäßig, wenn die grafische Ausgabeeinrichtung dazu eingerichtet ist, die grafische Ausgabe auf wenigstens einer Fensterscheibe, beispielsweise der Front- oder Heckscheibe des Kraftfahrzeugs auszugeben. Dies kann beispielsweise dann sehr hilfreich sein, wenn das Fahrzeug auf einem Parkplatz unter vielen anderen Fahrzeugen abgestellt ist. Bei Erscheinen der grafischen Ausgabe auf einer Fensterscheibe wird es dem Benutzer daher ermöglicht, auch durch andere Fahrzeuge hindurch die grafische Ausgabe erkennen zu können.

Zusätzlich kann es sehr hilfreich sein, wenn in Abhängigkeit der ausgelesenen Datei eine akustische Ausgabe auf der akustischen Ausgabeeinrichtung erfolgt.

Es ist ferner sehr zweckmäßig, wenn ein Außenmikrofon und eine nachgeschaltete Spracherkennungseinrichtung beim Kraftfahrzeug vorhanden sind. Diese sind dazu hergerichtet, Sprache eines im näheren Umfeld außerhalb des geschlossenen Kraftfahrzeugs befindlichen Nutzers zu erfassen und zu erkennen. Somit wird es einem Benutzer auch ohne ein mobiles Endgerät ermöglicht, durch Sprache eine entsprechende Reaktion beim Kraftfahrzeug hervorzurufen und somit dem Benutzer gleichermaßen das Auffinden seines Kraftfahrzeugs durch die geschilderte Personalisierung zu erleichtern.

Das Kraftfahrzeug kann auch mit einer Kamera und einer nachgeschalteten Gesichtserkennungseinrichtung ausgestattet sein, welche dazu hergerichtet sind, das Gesicht eines im näheren Umfeld außerhalb des geschlossenen Kraftfahrzeugs befindlichen Benutzers zu erkennen.

Auf diese Weise kann eine Überprüfung einer Berechtigung eines Benutzers auf einfache Weise durchgeführt werden.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: eine Darstellung eines möglichen Ablaufs des Verfahrens und
- Fig. 2: eine Darstellung eines zur Durchführung des Verfahrens hergerichteten Kraftfahrzeugs.

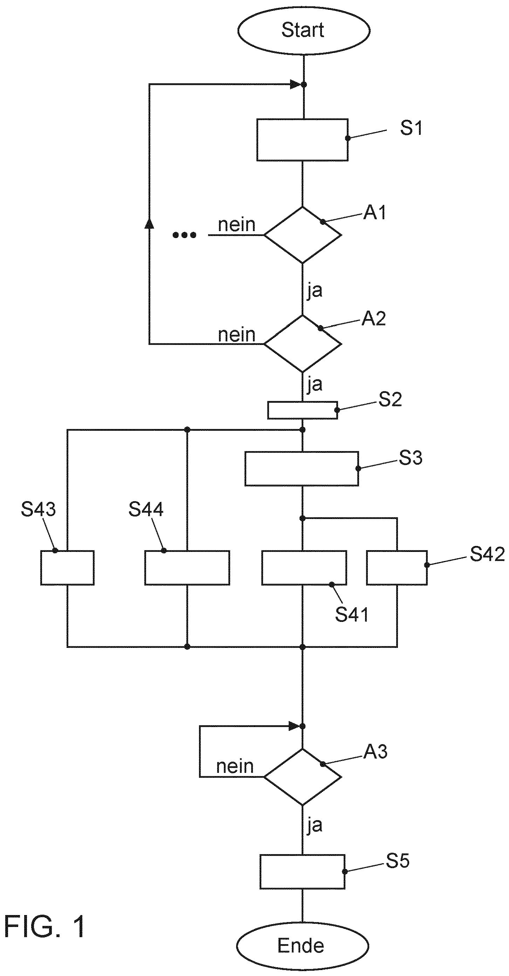

Zunächst wird auf die Fig. 1 Bezug genommen. In dieser Figur ist ein Ablaufdiagramm ersichtlich, mit dessen Hilfe das erfindungsgemäße Verfahren dargestellt werden soll.

Ausgehend von einem Startpunkt erfolgt in einem ersten Verfahrensschritt S1 eine Spracheingabe eines Benutzers in eine geeignete Spracherkennungseinrichtung. Die Spracherkennungseinrichtung kann eine Spracherkennungseinrichtung eines vom Benutzer mitgeführten, mobilen Endgeräts (beispielsweise Smartphone) sein oder auch eine Spracherkennungseinrichtung des Kraftfahrzeugs selbst.

Denkbar ist beispielsweise die Situation, dass der Benutzer zuvor sein Kraftfahrzeug auf einem Parkplatz abgestellt hat, nun zurückgekehrt ist und sein Kraftfahrzeug auffinden will. Der Benutzer trägt den Vornamen "*Vorname*" und hat diesen im Vorfeld über eine geeignete Eingabevorrichtung durch manuelle Eingabe oder über Spracheingabe in einer Speichereinrichtung des Kraftfahrzeugs abgelegt. Nun kann er sein Fahrzeug nach außen hin dadurch personalisieren und ein Auffinden erleichtern, indem er beispielsweise folgende Spracheingabe tätigt: "Hallo *Vorname,* wo bist du?"

In einem dadurch ausgelösten Algorithmus, welcher innerhalb des mobilen Endgerätes oder auch innerhalb einer Auswerte- und Steuereinrichtung des Kraftfahrzeugs abgelegt ist, wird alsdann in einer Abfrage A1 überprüft, ob die Spracheingabe auf einen Wunsch des Benutzers schließen lässt, dass von diesem ein Auffinden des Kraftfahrzeugs und/oder ein Öffnen des Kraftfahrzeugs gewünscht ist. Falls dies bejaht wird, erfolgt in einer zweiten Abfrage A2 eine Überprüfung, ob der Benutzer berechtigt ist, beim Kraftfahrzeug eine gewünschte Reaktion auszulösen.

Im Rahmen dieser Abfrage kann eine Berechtigungsüberprüfung durch die Abfrage eines manuell oder per Sprache einzugebenden Passwortes, durch eine Fingerabdruckprüfung, eine Gesichtserkennung und/oder auch durch eine Überprüfung der Stimme erfolgen.

Derartige Überprüfungen sind sowohl über ein mobiles Endgerät in Form eines Smartphones als auch durch geeignete Ausstattung des Kraftfahrzeugs selbst denkbar.

Wenn eine vorliegende Berechtigung des Benutzers bejaht wird, so erfolgt in einem Verfahrensschritt S2 das Senden eines Auslösesignals an das Kraftfahrzeug, welches dort von einer geeigneten Kommunikationseinrichtung empfangen und an eine Auswerte- und Steuereinrichtung weitergeleitet wird.

Das Auslösesignal führt weiterhin dazu, dass von der Auswerte- und Steuereinrichtung ein in einer Speichereinrichtung gespeicherter Name (Vor- und/oder Zuname) des Benutzers ausgelesen wird (Verfahrensschritt S3).

Der ausgelesene Name wird in einem Verfahrensschritt S41 grafisch auf einer geeigneten, grafischen Ausgabeeinrichtung (bspw. Display) des Kraftfahrzeugs, welche von außen gut sichtbar ist, ausgegeben.

Zusätzlich ist in einem Verfahrensschritt S42 denkbar, dass der gespeicherte Name auch als Sprachausgabe mit einer geeigneten, akustischen Ausgabeeinrichtung ausgegeben wird.

Verfahrensschritte S43 und S44 können dazu dienen, eine bestimmte, zuvor abgespeicherte Tonfolge abzuspielen (Verfahrensschritt S43) und dem Benutzer auf sein mobiles Endgerät einen Standort des Kraftfahrzeugs, welcher über ein geeignetes GPS-System ermittelt wurde, zu übermitteln (Verfahrensschritt S44).

In einer Abfrage A3 wird abgefragt, ob vom Benutzer auch ein Öffnen des Kraftfahrzeugs gewünscht war. Falls dies der Fall war, so erfolgt im Verfahrensschritt S5 ein Öffnen des Kraftfahrzeugs. Das Öffnen des Kraftfahrzeugs wird aus Sicherheitsgründen jedoch nach einer bestimmten, kurzen Zeitspanne ohne ein erfolgtes, manuelles Öffnen einer Tür oder einer Klappe des Kraftfahrzeugs wieder rückgängig gemacht.

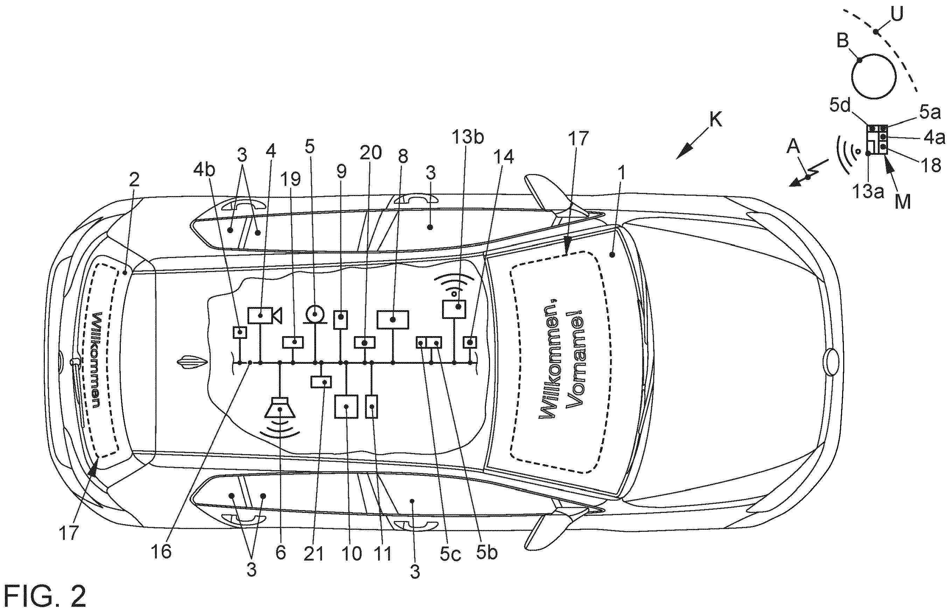

Aus der Fig. 2 ist nun ein Kraftfahrzeug K ersichtlich, welches zur Durchführung des erfindungsgemäßen Verfahrens hergerichtet ist.

Es ist dargestellt, dass sich ein Benutzer B in einer näheren Umgebung U des Kraftfahrzeugs K befindet.

Als nähere Umgebung U wird eine solche Umgebung verstanden, bei der sich der Benutzer B in einem Abstand von bis zu 50 Metern vom Kraftfahrzeug K befindet.

Das Kraftfahrzeug K weist eine Frontscheibe 1, eine Heckscheibe 2 und Seitenscheiben 3 auf. Des Weiteren ist es mit einer Außenkamera 4 mit nachgeschalteter Gesichtserkennungseinrichtung 4b, einem Außenmikrofon 5, einer als Außenlautsprecher ausgebildeten akustischen Ausgabeeinrichtung 6 sowie einer grafischen Ausgabeeinrichtung 8 ausgestattet.

Die grafische Ausgabeeinrichtung 8 kann beispielsweise als Projektionseinheit ausgebildet sein, welche dazu in der Lage ist, eine grafische Ausgabe 17 auf die Fensterscheiben des Kraftfahrzeugs K, beispielsweise auf die Frontscheibe 1 oder die Heckscheibe 2 zu werfen.

Das Kraftfahrzeug K verfügt ferner über eine dem Außenmikrofon 5 nachgeschaltete Spracherkennungseinrichtung 5b sowie eine Stimmenerkennungseinrichtung 5c.

Eine Umwandlungseinrichtung 9 ist vorhanden, mit der in einer Speichereinrichtung 11 abgelegte Dateien umgewandelt werden können. So kann vorzugsweise eine abgelegte Textdatei in Audio- und/oder Bilddaten umgewandelt werden. Es ist auch möglich, dass eine abgelegte Audiodatei in Text- und/oder Bilddaten umgewandelt wird.

Das Kraftfahrzeug K verfügt über eine GPS-Einrichtung 19, einen Internetzugang 20 und eine Scaneinrichtung 21.

Mit Hilfe der Scaneinrichtung 21 ist es beispielsweise sehr einfach möglich, den in einem Fahrzeugbrief hinterlegten Namen des Benutzers B einzuscannen und sogleich in der Speichereinrichtung 11 abzuspeichern.

Eine Kommunikationseinrichtung 13b des Kraftfahrzeugs K ist dazu ausgebildet, drahtlos von extern kommende Signale, beispielsweise von einem mobilen Endgerät M in Form eines Smartphones des Benutzers B, zu empfangen.

Schließlich ist eine Auswerte- und Steuereinrichtung 10 vorhanden, die über einen Datenbus 16 mit den übrigen genannten, elektrischen Komponenten des Kraftfahrzeugs K signaltechnisch verbunden ist.

Im Ausführungsbeispiel ist das mobile Endgerät M des Benutzers B mit einer Spracherkennungseinrichtung 5a, einer Stimmenerkennungseinrichtung 5d, mit einer Gesichtserkennungseinrichtung 4a sowie mit einer Fingerabdruckerkennungseinrichtung 18 ausgestattet.

Über eine Kommunikationseinrichtung 13a ist das mobile Endgerät M in der Lage, mit der Kommunikationseinrichtung 13b des Kraftfahrzeugs K zu kommunizieren.

Nachdem der Benutzer einen Sprachbefehl über die Spracherkennungseinrichtung 5a eingegeben hat, wird zunächst eine Überprüfung seiner Berechtigung durchgeführt. Bei dieser Berechtigung wird mit Hilfe der Gesichtserkennungseinrichtung 4a, der Stimmenerkennungseinrichtung 5d, der Fingerabdruckerkennungseinrichtung 18 und/oder mit Hilfe einer nicht näher dargestellten Passwortabfrageeinrichtung die Berechtigung des Benutzers B geprüft.

Wird eine Berechtigung des Benutzers B zur beschriebenen Ansteuerung des Kraftfahrzeugs K durch eine Auswertelogik des mobilen Endgerätes M festgestellt, so wird über die Kommunikationseinrichtung 13a des mobilen Endgeräts M ein geeignetes Auslösesignal A an die Kommunikationseinrichtung 13b des Kraftfahrzeugs K gesendet.

Das Auslösesignal A führt dazu, dass die Auswerte- und Steuereinrichtung 10 die Signale von Umfelderfassungseinrichtungen 14 und/oder der Außenkamera 4 abfragt und in Abhängigkeit von der daraus abgeleiteten Position des Benutzers B relativ zum Kraftfahrzeug das Außenmikrofon 6 und die grafische Ausgabeeinrichtung 8 derart ansteuert, dass die grafischen und akustischen Ausgaben des in der Speichereinrichtung 11 abgelegten Namens an einer für den Benutzer B gut erkennbaren Stelle ausgegeben werden. Im vorliegenden Fall erfolgt die grafische Ausgabe 17 daher auf der Frontscheibe 1. Bei dem Außenlautsprecher 6 handelt es sich vorzugsweise um einen Lautsprecher, dessen Schallabstrahlung auf einen bestimmten Bereich fokussiert werden kann. Zudem ist der Außenlautsprecher 6 über eine nicht näher dargestellte Mechanik auf diesen Bereich bewegbar bzw. ausrichtbar.

Vorhandene Umfelderfassungseinrichtungen 14 können beispielsweise als Ultraschall- oder Lidarsensoren ausgebildet sein. Mit ihnen ist auch eine Erfassung möglich, von welcher Seite sich ein Benutzer B dem Kraftfahrzeug K nähert.

Das Kraftfahrzeug K ist auf diese Weise gut ausgerüstet, um zur Durchführung des beschriebenen, erfindungsgemäßen Verfahrens eingesetzt zu werden.

### Bezugszeichenliste

- 1: Frontscheibe
- 2: Heckscheibe
- 3: Seitenscheiben
- 4: Kamera
- 4a: Gesichtserkennungseinrichtung
- 4b: Gesichtserkennungseinrichtung
- 5: Außenmikrofon
- 5a: Spracherkennungseinrichtung
- 5b: Spracherkennungseinrichtung
- 5c: Stimmenerkennungseinrichtung
- 5d: Stimmenerkennungseinrichtung
- 6: akustische Ausgabeeinrichtung; Außenlautsprecher
- 8: graphische Ausgabeeinrichtung
- 9: Umwandlungseinrichtung
- 10: Auswerte- und Steuereinrichtung
- 11: Speichereinrichtung
- 13a: Kommunikationseinrichtung
- 13b: Kommunikationseinrichtung
- 14: Umfelderfassungseinrichtung
- 16: Datenbus
- 17: graphische Ausgabe
- 18: Fingerabdruckerkennungseinrichtung
- 19: GPS-Einrichtung
- 20: Internetzugang
- 21: Scaneinrichtung

- A: Auslösesignal
- A1-A3: Abfragen
- B: Benutzer
- K: Kraftfahrzeug
- M: Mobiles Endgerät; Smartphone
- S1-S3, S41-S44, S5: Verfahrensschritte
- U: nähere Umgebung

## Patentansprüche

1. Verfahren zur Personalisierung eines Kraftfahrzeugs (K), wobei die Personalisierung zumindest durch eine graphische Ausgabe (17) auf wenigstens einer graphischen Ausgabeeinrichtung (8) des Kraftfahrzeugs (K) in Form eines Schriftzugs am Kraftfahrzeug (K) erfolgt, **dadurch gekennzeichnet, dass** die graphische Ausgabe (17) als Reaktion auf eine von einem Benutzer (B) durchgeführte und von einer Spracherkennungseinrichtung (5a, 5b) erkannte Spracheingabe durchgeführt wird, die den Wunsch des Benutzers (B) erkennen lässt, dass von diesem ein Auffinden des Kraftfahrzeugs (K) und/oder ein Öffnen des Kraftfahrzeugs (K) gewünscht ist, wobei die Personalisierung zusätzlich durch Ausgabe eines akustischen Signals erfolgt, wobei vor der graphischen und akustischen Ausgabe (17) eine Überprüfung dahingehend durchgeführt wird, ob der Benutzer (B) zum Auslösen der besagten Reaktion berechtigt ist, wobei die Überprüfung durch die Kommunikation einer Kommunikationseinrichtung (13a) eines mobilen Endgerätes (M) des Benutzers (B) mit einer Kommunikationseinrichtung (13b) des Kraftfahrzeugs (K) erfolgt und wobei bei einer festgestellten Berechtigung des Benutzers (B) durch eine Auswertelogik des mobilen Endgerätes (M) über die Kommunikationseinrichtung (13a) des mobilen Endgerätes (M) ein Auslösesignal (A) an die Kommunikationseinrichtung (13b) des Kraftfahrzeugs (K) gesendet wird, welches dazu führt, dass eine Auswerte- und Steuereinrichtung (10) des Kraftfahrzeugs (K) die Signale von Umfelderfassungseinrichtungen (14) und/oder einer Außenkamera (4) abfragt und in Abhängigkeit von der daraus abgeleiteten Position des Benutzers (B) relativ zum Kraftfahrzeug (K) eine als Außenlautsprecher ausgebildete, akustische Ausgabeeinrichtung (6) und die grafische Ausgabeeinrichtung (8) derart ansteuert, dass die grafischen und akustischen Ausgaben des in einer Speichereinrichtung (11) abgelegten Namens an einer für den Benutzer (B) gut erkennbaren Stelle ausgegeben werden.

2. Verfahren nach Anspruch 1, **dadurch gekennzeichnet, dass** zum Zweck der graphischen Ausgabe (17) des Schriftzugs ein in einer Speichereinrichtung (11) abgespeicherter Name des Benutzers (B) ausgelesen und eine graphische Ausgabeeinrichtung (8) des Kraftfahrzeugs (K) derart angesteuert wird, dass der ausgelesene Name zumindest als ein Bestandteil des Schriftzugs angezeigt wird.

3. Verfahren nach Anspruch 1 oder 2, **dadurch gekennzeichnet, dass** das akustische Signal eine Sprachausgabe des in der Speichereinrichtung (11) abgespeicherten Namens des Benutzers (B) ist.

4. Verfahren nach einem der vorhergehenden Ansprüche, **dadurch gekennzeichnet, dass** als Reaktion auf die Spracheingabe des Benutzers (B) ein aktueller Standort des Kraftfahrzeugs (K) auf ein die Spracheingabe empfangendes, mobiles Endgerät (M) drahtlos übermittelt wird.

5. Verfahren nach einem der vorhergehenden Ansprüche, **dadurch gekennzeichnet, dass** die Überprüfung über eine Passwortabfrage, eine Fingerabdruckerkennung, eine Gesichtserkennung und/oder über eine Erkennung der Stimme des Benutzers (B) erfolgt.

6. Kraftfahrzeug (K) zur Durchführung des Verfahrens nach einem der vorhergehenden Ansprüche, mit wenigstens einer graphischen Ausgabeeinrichtung (8) zur Ausgabe wenigstens eines Schriftzugs, wenigstens einer akustischen Ausgabeeinrichtung (6) zur Ausgabe eines akustischen Signals, wenigstens einer Speichereinrichtung (11) zur Speicherung von Dateien, wenigstens einer Umwandlungseinrichtung (9) zur Umwandlung einer Textdatei in Audio- und/oder Bilddaten oder zur Umwandlung einer Audiodatei in Text- und/oder Bilddaten, wenigstens einer Auswerte- und Steuereinrichtung (10) zur Ansteuerung zumindest der wenigstens einen graphischen und/oder akustischen Ausgabeeinrichtung (8 oder 6) sowie wenigstens einer Kommunikationseinrichtung (13b) zur Kommunikation mit einem mobilen Endgerät (M) eines Benutzers (B), **dadurch gekennzeichnet, dass** die Auswerte- und Steuereinrichtung (10) dazu hergerichtet ist, nach Empfang eines über die Kommunikationseinrichtung (13b) eingegangenen Auslösesignals (A) wenigstens eine Datei aus der Speichereinrichtung (11) auszulesen und in Abhängigkeit davon eine graphische Ausgabe (17) über die graphische Ausgabeeinrichtung (8) und ein akustisches Signal über die akustische Ausgabeeinrichtung (6) auszugeben, wobei die Auswerte- und Steuereinrichtung (10) dazu hergerichtet ist, die Signale von Umfelderfassungseinrichtungen (14) und/oder einer Außenkamera (4) abzufragen und in Abhängigkeit von einer daraus abgeleiteten Position des Benutzers (B) relativ zum Kraftfahrzeug (K) die als Außenlautsprecher ausgebildete, akustische Ausgabeeinrichtung (6) und die grafische Ausgabeeinrichtung (8) derart anzusteuern, dass die grafischen und akustischen Ausgaben eines in der Speichereinrichtung (11) abgelegten Namens des Benutzers (B) an einer für diesen gut erkennbaren Stelle ausgegeben werden.

7. Kraftfahrzeug nach Anspruch 6, **dadurch gekennzeichnet, dass** die graphische Ausgabeeinrichtung (8) dazu eingerichtet ist, die graphische Ausgabe (17) auf wenigstens einer Fensterscheibe des Kraftfahrzeugs (K) auszugeben.

8. Kraftfahrzeug nach Anspruch 6 oder 7, **gekennzeichnet durch** ein Außenmikrofon (5) und eine nachgeschaltete Spracherkennungseinrichtung (5b), welche dazu hergerichtet sind, Sprache eines im näheren Umfeld (U) außerhalb des geschlossenen Kraftfahrzeugs (K) befindlichen Benutzers (B) zu erfassen und zu erkennen.

9. Kraftfahrzeug nach einem der Ansprüche 6 bis 8, **gekennzeichnet durch** eine Außenkamera (4) und eine nachgeschaltete Gesichtserkennungseinrichtung (4b), welche dazu hergerichtet sind, das Gesicht eines im näheren Umfeld (U) außerhalb des geschlossenen Kraftfahrzeugs (K) befindlichen Benutzers (B) zu erkennen.

## Claims

1. Method for personalizing a motor vehicle (K), the personalization being carried out at least by way of a graphical output (17) on at least one graphical output device (8) of the motor vehicle (K) in the form of an inscription on the motor vehicle (K), **characterized in that** the graphical output (17) is performed in response to a voice input, performed by a user (B) and recognized by a voice recognition device (5a, 5b), that discloses the requirement of the user (B) that said user requires the motor vehicle (K) to be located and/or the motor vehicle (K) to be opened, wherein the personalization is additionally carried out by way of output of an audible signal, wherein the graphical and audible output (17) is preceded by a check being performed to ascertain whether the user (B) is entitled to trigger said reaction, wherein the check is carried out by way of the communication between a communication device (13a) of a mobile terminal (M) of the user (B) and a communication device (13b) of the motor vehicle (K) and wherein detection of the entitlement of the user (B) results in evaluation logic of the mobile terminal (M) using the communication device (13a) of the mobile terminal (M) to transmit a trigger signal (A) to the communication device (13b) of the motor vehicle (K) that leads to an evaluation and control device (10) of the motor vehicle (K) requesting the signals from surroundings detection devices (14) and/or an exterior camera (4) and taking the position, derived therefrom, of the user (B) relative to the motor vehicle (K) as a basis for driving an audible output device (6), in the form of an exterior loudspeaker, and the graphical output device (8) in such a way that the graphical and audible outputs of the name stored in a storage device (11) are output at a spot that is easily discernible by the user (B).

2. Method according to Claim 1, **characterized in that** for the purpose of the graphical output (17) of the inscription a name of the user (B) that is stored in a storage device (11) is read and a graphical output device (8) of the motor vehicle (K) is driven in such a way that the name that has been read is displayed as at least a part of the inscription.

3. Method according to Claim 1 or 2, **characterized in that** the audible signal is a voice output of the name of the user (B) that is stored in the storage device (11).

4. Method according to one of the preceding claims, **characterized in that** in response to the voice input from the user (B) a current location of the motor vehicle (K) is wirelessly relayed to a mobile terminal (M) receiving the voice input.

5. Method according to one of the preceding claims, **characterized in that** the check is carried out using a password request, a fingerprint recognition, a face recognition and/or using a recognition of the voice of the user (B).

6. Motor vehicle (K) for performing the method according to one of the preceding claims, having at least one graphical output device (8) for outputting at least one inscription, at least one audible output device (6) for outputting an audible signal, at least one storage device (11) for storing files, at least one conversion device (9) for converting a text file into audio and/or image data or for converting an audio file into text and/or image data, at least one evaluation and control device (10) for driving at least the at least one graphical and/or audible output device (8 or 6) and also at least one configuration device (13b) for communicating with a mobile terminal (M) of a user (B), **characterized in that** the evaluation and control device (10) is set up so as, after receiving a trigger signal (A) that has arrived via the communication device (13b), to read at least one file from the storage device (11) and to take this as a basis for outputting a graphical output (17) via the graphical output device (8) and an audible signal via the audible output device (6), wherein the evaluation and control device (10) is set up to request the signals from surroundings detection devices (14) and/or an exterior camera (4) and to take a position, derived therefrom, of the user (B) relative to the motor vehicle (K) as a basis for driving the audible output device (6), in the form of an exterior loudspeaker, and the graphical output device (8) in such a way that the graphical and audible outputs of a name of the user (B) that is stored in the storage device (11) are output at a spot that is easily discernible by said user.

7. Motor vehicle according to Claim 6, **characterized in that** the graphical output device (8) is configured to output the graphical output (17) on at least one windowpane of the motor vehicle (K).

8. Motor vehicle according to Claim 6 or 7, **characterized by** an exterior microphone (5) and a downstream voice recognition device (5b) that are set up to pick up and recognize voice from a user (B) who is in the immediate surroundings (U) outside the closed motor vehicle (K).

9. Motor vehicle according to one of Claims 6 to 8, **characterized by** an exterior camera (4) and a downstream face recognition device (4b) that are set up to recognize the face of a user (B) who is in the immediate surroundings (U) outside the closed motor vehicle (K).

## Revendications

1. Procédé permettant de personnaliser un véhicule automobile (K), la personnalisation étant effectuée au moins par une sortie graphique (17) sur au moins un dispositif de sortie graphique (8) du véhicule automobile (K) sous la forme d'une inscription sur le véhicule automobile (K),
**caractérisé en ce que** la sortie graphique (17) est effectuée en réponse à une entrée vocale, effectuée par un utilisateur (B) et reconnue par un dispositif de reconnaissance vocale (5a, 5b), qui permet d'identifier le souhait de l'utilisateur (B) qu'il souhaite retrouver le véhicule automobile (K) et/ou ouvrir le véhicule automobile (K), dans lequel la personnalisation est effectuée en plus par la sortie d'un signal acoustique, dans lequel, avant la sortie (17) graphique et acoustique, il est vérifié en continu si l'utilisateur (B) est autorisé à déclencher ladite réponse, dans lequel la vérification est effectuée par la communication d'un dispositif de communication (13a) d'un terminal mobile (M) de l'utilisateur (B) avec un dispositif de communication (13b) du véhicule automobile (K), et dans lequel, en cas d'autorisation constatée de l'utilisateur (B), une logique d'évaluation du terminal mobile (M) envoie un signal de déclenchement (A) par le dispositif de communication (13a) du terminal mobile (M) au dispositif de communication (13b) du véhicule automobile (K), ledit signal amenant un dispositif d'évaluation et de mémoire (10) du véhicule automobile (K) à demander les signaux de dispositifs de détection d'environnement (14) et/ou d'une caméra extérieure (4), et pilote en fonction de la position de l'utilisateur (B) par rapport au véhicule automobile (K), dérivée de ceux-ci, un dispositif de sortie acoustique (6) réalisé sous forme de haut-parleur extérieur et le dispositif de sortie graphique (8) de telle sorte que les sorties graphique et acoustique du nom mis en mémoire dans le dispositif de mémoire (11) sont émises à un endroit bien visible pour l'utilisateur (B).

2. Procédé selon la revendication 1, **caractérisé en ce que** dans le but de la sortie graphique (17) de l'inscription, un nom de l'utilisateur (B) mémorisé dans un dispositif de mémoire (11) est lu, et un dispositif de sortie graphique (8) du véhicule automobile (K) est piloté de telle sorte que le nom lu est affiché au moins comme un composant de l'inscription.

3. Procédé selon la revendication 1 ou 2, **caractérisé en ce que** le signal acoustique est une sortie vocale du nom de l'utilisateur (B) mémorisé dans le dispositif de mémoire (11).

4. Procédé selon l'une quelconque des revendications précédentes, **caractérisé en ce qu'**en réponse à l'entrée vocale de l'utilisateur (B), un emplacement actuel du véhicule automobile (K) est transmis sans fil à un terminal mobile (M) recevant l'entrée vocale.

5. Procédé selon l'une quelconque des revendications précédentes, **caractérisé en ce que** la vérification est effectuée par une demande de mot de passe, une reconnaissance d'empreinte digitale, une reconnaissance faciale et/ou une reconnaissance de la voix de l'utilisateur (B).

6. Véhicule automobile (K) permettant d'exécuter le procédé selon l'une quelconque des revendications précédentes, comprenant au moins un dispositif de sortie graphique (8) pour émettre au moins une inscription, au moins un dispositif de sortie acoustique (6) pour émettre un signal acoustique, au moins un dispositif de mémoire (11) pour mémoriser des fichiers, au moins un dispositif de conversion (9) pour convertir un fichier texte en données audio et/ou d'image ou pour convertir un fichier audio en données texte et/ou d'image, au moins un dispositif d'évaluation et de commande (10) pour piloter au moins ledit au moins un dispositif de sortie graphique et/ou acoustique (8 ou 6), ainsi qu'au moins un dispositif de communication (13b) pour communiquer avec un terminal mobile (M) d'utilisateur (B),
**caractérisé en ce qu'**après réception d'un signal de déclenchement (A) arrivé par l'intermédiaire du dispositif de communication (13b), le dispositif d'évaluation et de commande (10) est conçu pour lire au moins un fichier à partir du dispositif de mémoire (11) et pour émettre en fonction de celui-ci une sortie graphique (17) par l'intermédiaire du dispositif de sortie graphique (8) et un signal acoustique par l'intermédiaire du dispositif de sortie acoustique (6), dans lequel le dispositif d'évaluation et de commande (10) est conçu pour demander les signaux à partir de dispositifs de détection d'environnement (14) et/ou d'une caméra extérieure (4), et pour piloter, en fonction d'une position de l'utilisateur (B) par rapport au véhicule automobile (K), dérivée de ceux-ci, le dispositif de sortie acoustique (6) réalisé sous forme de haut-parleur extérieur et le dispositif de sortie graphique (8) de telle sorte que les sorties graphique et acoustique d'un nom de l'utilisateur (B) mis en mémoire dans le dispositif de mémoire (11) sont émises à un endroit bien visible pour celui-ci.

7. Véhicule automobile selon la revendication 6, **caractérisé en ce que** le dispositif de sortie graphique (8) est conçu pour émettre la sortie graphique (17) sur au moins une vitre du véhicule automobile (K).

8. Véhicule automobile selon la revendication 6 ou 7, **caractérisé par** un microphone extérieur (5) et un dispositif de reconnaissance vocale (5b) placé en aval qui est conçu pour détecter et reconnaître la parole d'un utilisateur (B) se trouvant dans l'environnement proche (U) à l'extérieur du véhicule automobile fermé (K).

9. Véhicule automobile selon l'une quelconque des revendications 6 à 8, **caractérisé par** une caméra extérieure (4) et un dispositif de reconnaissance faciale (4b) placé en aval qui est conçu pour reconnaître le visage d'un utilisateur (B) se trouvant dans l'environnement proche (U) à l'extérieur du véhicule automobile (K) fermé.
